# FASCICULE DE BREVET EUROPEEN

(11) **EP 4 327 690 B1**
(45) Date de publication et mention de la délivrance du brevet: **20.08.2025**
(21) Numéro de dépôt: 22191546.5
(22) Date de dépôt: 22.08.2022
(51) Int. Cl.: A44C 27/00, G04B 19/12, G04B 45/02

(54) **COMPOSANT D'HABILLAGE D'UNE MONTRE OU D'UN ARTICLE DE MODE, DE BIJOUTERIE OU DE JOAILLERIE ET PROCÉDÉ DE FABRICATION D'UN TEL COMPOSANT D'HABILLAGE**
VERKLEIDUNGSBAUTEIL EINER UHR ODER EINES MODE-, SCHMUCK- ODER SCHMUCKARTIKELS UND VERFAHREN ZUR HERSTELLUNG EINES SOLCHEN VERKLEIDUNGSBAUTEILS
TRIM COMPONENT FOR A WATCH OR AN ARTICLE OF FASHION, JEWELLERY OR JEWELLERY AND METHOD FOR MANUFACTURING SUCH A TRIM COMPONENT

(43) Date de publication de la demande: 28.02.2024
(73) Titulaire: Comadur S.A., 2400 Le Locle (CH)
(72) Inventeur: LINTYMER, Jan, 25620 Mamirolle (FR); GIRY, Benoit, 25130 Villers-Le-Lac (CH); RITTINER, Gabriel, 2400 Le Locle (CH); VUILLE, Pierry, 2338 Les Emibois (CH)
(74) Mandataire: ICB SA

(56) Documents cités:
- EP-A1- 3 708 384
- EP-A1- 3 709 102
- EP-B1- 0 985 985
- EP-B1- 1 893 542
- EP-B1- 3 037 897
- CH-A1- 713 871
- US-A1- 2004 239 750

## Description

### Domaine technique de l'invention

L'invention relève du domaine de l'horlogerie, des articles de modes, de bijouterie ou de joaillerie, et concerne plus particulièrement un composant d'habillage d'une montre, d'un article de mode, de bijouterie ou de joaillerie et un procédé de fabrication d'un tel composant d'habillage.

Dans le présent texte, la notion « d'article de mode » comprend les articles ou accessoires d'habillement, tels que les ceintures, chaussures, vêtements, etc., et comprend en outre les articles de lunetterie, les articles de téléphonie, ou tout objet décoratif.

### Arrière-plan technologique

Dans le domaine de l'horlogerie en particulier, les composants d'habillage pour montres, notamment les cadrans, rehauts, lunettes, etc., peuvent présenter des décors réalisés à partir de couches minces déposées à la surface d'un substrat.

Suivant la dimension et le nombre de détails du décor du composant d'habillage, ce dernier peut être relativement complexe à réaliser. Notamment, le respect des tolérances d'alignement des couches minces les unes par rapport aux autres peut être particulièrement problématique. EP 3 709 102 A1 divulgue un art antérieur selon le préambule de la revendication 1.

Dans ce cadre, la présente invention vise à améliorer la précision et la qualité des décors d'un composant d'habillage d'une montre, notamment dans l'aspect visuel de couches minces juxtaposées visibles à travers un substrat transparent.

En particulier, l'invention résout le problème de respect des tolérances d'alignement des décors sur un composant d'habillage, notamment de l'alignement des couches minces entre elles et vis-à-vis de structurations sur lesquelles lesdites couches minces sont déposées.

De manière générale, on retrouve également les problématiques précitées dans les domaines des articles de mode, de bijouterie ou de joaillerie.

### Résumé de l'invention

L'invention concerne, à cet effet, un composant d'habillage d'une montre, d'un article de mode ou d'un article de bijouterie ou de joaillerie, comprenant un substrat réalisé dans un matériau transparent, ledit substrat comprenant une face supérieure opposée à une face inférieure polie. Le composant d'habillage comprend en outre une couche de base déposée sur une première portion de la face supérieure et au moins une couche secondaire déposée sur une deuxième portion de la face supérieure. La première et la deuxième portion de la face supérieure présentent des états de surface différents l'une de l'autre.

Dans des modes particuliers de réalisation, la première portion de la face supérieure est polie, et la deuxième portion de la face supérieure présente au moins une structuration.

Dans des modes particuliers de réalisation, la couche de base et la couche secondaire sont de composition différente l'une de l'autre.

Dans des modes particuliers de réalisation, la couche de base et la couche secondaire comportent une ouverture traversante débouchant sur une troisième portion de la face supérieure du substrat.

Selon l'invention, le composant d'habillage comporte une couche de base inférieure déposée sur une première portion de la face inférieure, ledit composant d'habillage comprenant également une couche secondaire inférieure déposée sur une deuxième portion, structurée, de la face inférieure. Les couches de base inférieure et secondaire inférieure comportent une ouverture traversante inférieure débouchant sur une troisième portion de la face inférieure s'étendant au moins en regard de la première et de la deuxième portion de la face supérieure.

Selon un autre aspect, la présente invention concerne un cadran de montre formé par un composant d'habillage tel que précédemment décrit.

Selon encore un autre aspect, la présente invention concerne un élément décoratif d'une coque de téléphone formé par un composant d'habillage tel que précédemment décrit.

Selon encore un autre aspect, la présente invention concerne procédé de fabrication d'un composant d'habillage d'une montre, d'un article de mode, de bijouterie ou de joaillerie comprenant les étapes suivantes :
- polissage d'une face inférieure d'un substrat réalisé dans un matériau transparent,
- dépôt d'une couche de base sur tout ou partie de la surface d'une face supérieure du substrat,
- ablation localisée de la couche de base, dans laquelle une partie de ladite couche de base est conservée sur une première portion de la face supérieure du substrat, ladite ablation étant réalisée de sorte à former au moins une poche débouchant sur une deuxième portion de la face supérieure du substrat et de sorte à structurer ladite deuxième portion de la face supérieure du substrat,
- dépôt d'une couche secondaire sur la couche de base et sur la deuxième portion de la face supérieure du substrat.

Dans des modes particuliers de mise en œuvre, le procédé comporte une étape préliminaire de polissage de la face supérieure du substrat.

Dans des modes particuliers de mise en œuvre, le procédé comporte une étape de gravure dans laquelle une partie de la couche de base et une partie de la couche secondaire sont éliminées sur l'ensemble de leur épaisseur, sans que le substrat ne soit impacté, de sorte à former au moins une ouverture traversante débouchant sur une troisième portion de la face supérieure du substrat.

Le procédé revendiqué comporte des étapes successives de :
- dépôt d'une couche de base inférieure sur tout ou partie de la surface de la face inférieure,
- d'ablation localisée de la couche de base inférieure de sorte à réaliser une structuration inférieure sur une deuxième portion de la face inférieure du substrat,
- dépôt d'une couche secondaire inférieure sur la couche de base inférieure et sur la structuration inférieure,
- gravure de sorte à générer une ou des ouvertures traversantes inférieure débouchant sur une troisième portion de la face inférieure du substrat, lesdites ouvertures traversantes inférieures étant générées de sorte que ladite troisième portion de la face inférieure s'étende au moins en regard de la première et de la deuxième portion de la face supérieure.

Dans des modes particuliers de mise en œuvre, le procédé comporte une étape finale de dépôt de revêtement antireflet sur la face supérieure et/ou la face inférieure du substrat.

Dans des modes particuliers de mise en œuvre, l'étape d'ablation locale de la couche de base est réalisée par faisceau laser.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- les figures 1 et 2 représentent respectivement, schématiquement en vue en coupe, un composant d'habillage en cours de réalisation par la mise en œuvre d'étapes d'un procédé de fabrication selon un exemple préféré de réalisation de l'invention ;
- les figures 3 à 5 représentent respectivement, schématiquement en vue en coupe, un composant d'habillage en cours de réalisation ou obtenu par la mise en œuvre du procédé de fabrication selon l'invention, dans des exemples de réalisation de l'invention.

On note que les figures ne sont pas à l'échelle.

### Description détaillée de l'invention

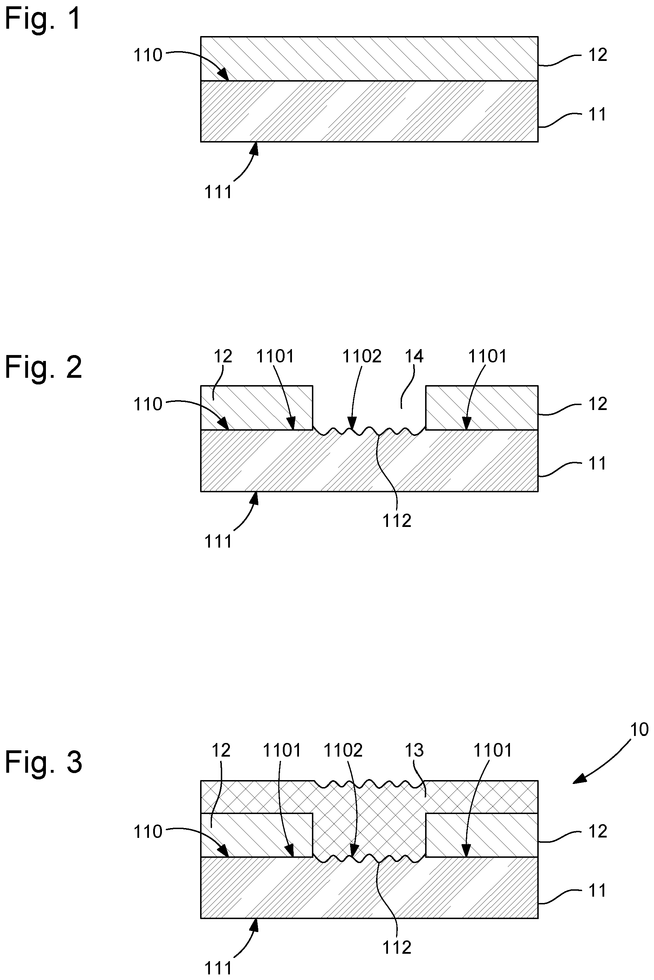

La présente invention concerne un composant d'habillage 10 tel que représenté sur les figures 3 à 5 dans différents exemples de réalisation, et tel que représenté, lors d'étapes de sa fabrication, sur les figures 1 et 2.

L'invention peut avantageusement constituer un élément décoratif d'une montre, d'un article de mode, ou d'un article de bijouterie ou de joaillerie.

Les termes « articles de mode » définissent tout article ou accessoire d'habillement, tels qu'une ceinture, une chaussure, un vêtement, etc., et comprend en outre les articles de lunetterie, les articles de téléphonie, tels que les coques de téléphones, ou tout objet décoratif.

Le composant d'habillage 10 comprend un substrat 11 réalisé dans un matériau transparent. Il y a lieu de noter que le terme « transparent » désigne dans le présent texte une capacité d'un matériau à laisser passer tout ou partie d'un rayonnement lumineux, notamment de la lumière visible à l'œil nu. Un tel matériau transparent peut être du saphir, du verre, etc.

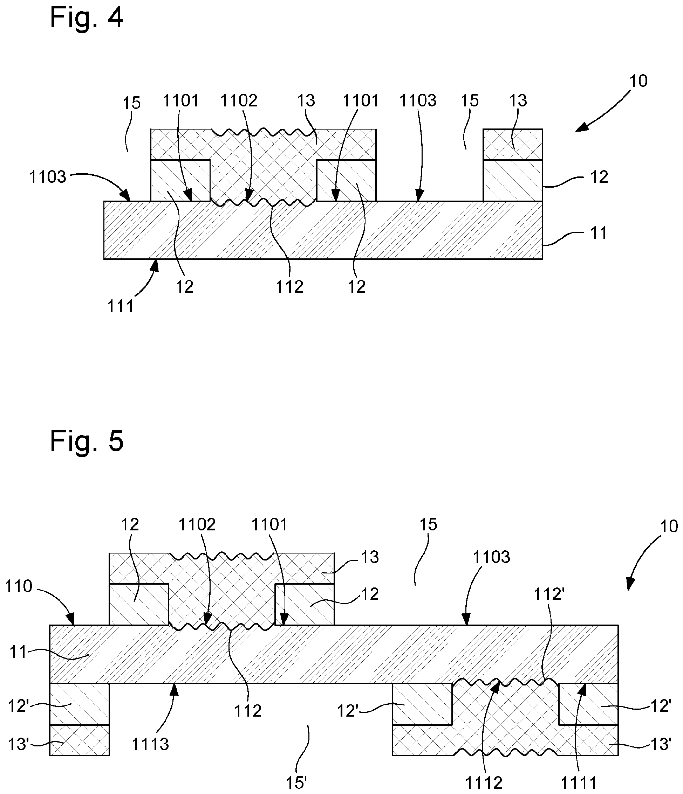

Le substrat 11 comporte une face supérieure 110 opposée à une face inférieure 111 depuis laquelle un utilisateur est destiné à voir un décor du composant d'habillage 10, à travers ledit substrat 11, au moins dans les exemples de réalisation de l'invention représentés sur les figures 3 et 4. Avantageusement, la face inférieure 111 du substrat 11 est donc préférentiellement polie.

En particulier, dans ces exemples de réalisation, la face inférieure 111 est destinée à être orientée vers un environnement extérieur et la face supérieure 110 est destinée à être orientée vers un environnement intérieur, par exemple en regard d'un mouvement horloger, dans le cas dans lequel le composant d'habillage 10 est un composant d'une montre.

Dans le présent texte, les termes relatifs « inférieur » et « supérieur » sont utilisés ici pour décrire des éléments par rapport à leur agencement représenté sur les figures et ne décrivent pas nécessairement une position absolue desdits éléments. Par conséquent, l'homme du métier comprend que de tels termes peuvent être interchangeables avec d'autres termes et que les exemples de réalisation décrits ici sont capables de fonctionner dans d'autres orientations que celles illustrées sur les figures et décrites.

Le composant d'habillage 10 comprend une couche de base 12 déposée sur une première portion 1101 de la face supérieure 110 et au moins une couche secondaire 13 déposée sur la couche de base 12 et sur une deuxième portion 1102 de la face supérieure 110 non recouverte par ladite couche de base 12. Comme le montrent les figures 3 à 5, la première et la deuxième portion 1101 et 1102 de la face supérieure 110 sont contiguës l'une à l'autre.

Avantageusement, la première et la deuxième portion 1101 et 1102 de la face supérieure 110 présentent des états de surface différents l'une de l'autre.

En particulier, la première portion 1101 de la face supérieure 110 est préférentiellement polie, et la deuxième portion 1102 de la face supérieure 110 présente préférentiellement au moins une structuration 112. Dans la présente description de l'invention, il est fait référence ci-dessous à une seule deuxième portion 1102 et donc une seule structuration 112 pour faciliter la lecture. La notion de « structuration » définit ici une surface dont la topographie a été modifiée et celle-ci peut consister en un satinage, une texturation, une gravure, etc. La combinaison entre la couche de base 12, la couche secondaire 13 et les différents états de surface de la face supérieure 110 du substrat 11 est avantageusement susceptible de former un décor particulièrement attractif.

Comme le montrent les figures 3 à 5, la couche secondaire 13 épouse la forme de structuration 112 sur une portion de sa surface en vis-à-vis de la deuxième portion 1102 de la face supérieure 110. La couche secondaire 13 reproduit donc la structuration 112 sur sa face externe, c'est-à-dire sa face orientée dans un sens opposé au substrat.

La couche de base 12 et la couche secondaire 13 présentent préférentiellement des compositions différentes l'une de l'autre. Elles peuvent être réalisées en métal, tel qu'en chrome, en or, en titane, en zirconium, etc., ou en céramique ou tout matériau approprié. Ces couches peuvent également être constituées, l'une et/ou l'autre, par un empilement de couches minces, de façon connue en soi par l'homme du métier. La couche de base 12 et/ou la couche secondaire 13 peuvent être opaque ou translucide.

Dans un exemple de réalisation représenté sur la figure 4, la couche de base 12 et la couche secondaire 13 peuvent comporter une ouverture traversante 15 débouchant sur une troisième portion 1103 de la face supérieure 110.

Avantageusement, un utilisateur est donc apte à voir à travers le composant d'habillage 10 lorsque la couche de base 12 et la couche secondaire 13 comportent une ouverture traversante 15.

Dans ce cas, le composant d'habillage 10 peut comprendre un revêtement antireflet (non représenté sur les figures) déposé sur la face inférieure 111 du substrat 11 et/ou sur la couche secondaire 13 et la troisième portion 1103 de la face supérieure 110 du substrat 11.

Selon l'invention et comme représenté sur la figure 5, le composant d'habillage 10 comporte, sur une première portion 1111 de la face inférieure 111 du substrat 11, de manière analogue à la face supérieure 110, une couche de base, dite « couche de base inférieure » 12'. En outre, une « couche secondaire dite couche secondaire inférieure 13' » est déposée sur une deuxième portion 1112, structurée, de la face inférieure 111, dite « structuration inférieure » 112', et sur la couche de base inférieure 12'. De façon analogue aux couches de base 12 et secondaire 13, la couche de base inférieure 12' et la couche secondaire inférieure 13' peuvent être réalisés dans des matériaux métallique ou céramique, ou en tout autre matériau approprié, et présentent préférentiellement des compositions différentes l'une de l'autre. Ces couches peuvent également être constituées, l'une et/ou l'autre, par un empilement de couches minces, de façon connue en soi par l'homme du métier.

De manière analogue à l'exemple de réalisation représenté sur la figure 4, la couche de base inférieure 12' et la couche secondaire inférieure 13' selon l'invention comportent au moins une ouverture traversante inférieure 15'. Ladite ouverture traversante inférieure 15' débouche sur une troisième portion 1113 de la face inférieure 111 s'étendant au moins en regard de la première et de la deuxième portion 1101 et 1102 de la face supérieure 110, comme le montre la figure 5. Ceci de sorte que le décor généré par la combinaison entre la couche de base 12, la couche secondaire 13 et les différents états de surface de la face supérieure 110 du substrat 11 soit visible pour un utilisateur regardant à travers le substrat 11, depuis la face inférieure 111.

Egalement de façon analogue aux exemples de réalisation des exemples de réalisation représentés sur les figures 3 et 4, la couche secondaire inférieure 13' épouse la forme de structuration inférieure 112' sur une portion de sa surface en vis-à-vis de la deuxième portion inférieure 1102 de la face inférieure 111. La couche secondaire inférieure 13' reproduit donc la structuration inférieure 112' sur sa face externe, c'est-à-dire sa face orientée dans un sens opposé au substrat 11, comme le montre la figure 5.

Par ailleurs, le composant d'habillage 10 est préférentiellement réalisé par un procédé de fabrication dont les étapes sont représentées de manière chronologique par les figures 1 à 3 et éventuellement 1 à 4 ou 1 à 5 dans d'autres exemples de mise en œuvre.

Plus particulièrement, le procédé de fabrication comprend une étape de polissage de la face inférieure 111 du substrat 11, suivie d'une étape de dépôt de la couche de base 12 sur tout ou partie de la surface de la face supérieure 110 du substrat 11, tel que représenté sur la figure 1.

Un tel dépôt peut être réalisé par méthode de dépôt physique par phase vapeur, de dépôt chimique par phase vapeur, ou par toute autre méthode appropriée.

Préférentiellement, la face supérieure 110 est polie lors d'une étape préliminaire de polissage, préalablement au dépôt de la couche de base 12.

Le procédé comporte par la suite une étape d'ablation localisée de la couche de base 12, tel que représenté par la figure 2, de sorte à former une ou des poches 14 débouchant sur la face supérieure 110 du substrat 11 et, dans le même temps, à structurer ladite face supérieure 110 au niveau de la ou de chacune des poches 14 afin de réaliser une structuration 112.

Plus particulièrement, à l'issue de l'étape d'ablation localisée, la partie de la couche de base 12 non impactée par l'ablation repose contre la première portion 1101 de la face supérieure 110 du substrat 11, les poches 14 débouchent sur la deuxième portion 1102 de la face supérieure 110, et ladite deuxième portion 1102 de la face supérieure 110 est structurée. Ainsi, la ou chaque structuration 112 coïncide parfaitement avec la poche 14 avec laquelle elle est générée, et ainsi avec la couche de base 12.

L'ablation locale de la couche de base 12, et par voie de conséquence, la ou les structurations 112 de la deuxième portion 1102 de la face supérieure 110, est préférentiellement réalisée par usinage laser. Alternativement, l'étape d'ablation locale peut être réalisée par gravure robotisée avec une pointe diamant, par usinage mécanique, chimique, etc.

Une étape de dépôt d'une couche secondaire 13 est par la suite réalisée sur la couche de base 12 et dans les poches 14, c'est-à-dire, sur la deuxième portion 1102 de la face supérieure 110 du substrat 11, de sorte à obtenir un composant d'habillage 10, comme visible sur la figure 3. Le respect des tolérances d'alignement de la couche de base 12 et de la couche secondaire 13 avec la première et la deuxième portion 1101 et 1102 de la face supérieure 110 présentant des états de surface différents est donc assuré.

On note que, grâce aux caractéristiques de l'invention, l'aspect visuel du décor du composant d'habillage 10 peut être particulièrement attractif dans la mesure où au contraste entre la possible différence de couleurs de la couche de base 12 et de la couche secondaire 13, s'ajoute le contraste entre les différents états de surface des différentes portions de la face supérieure 110 sur lesquelles lesdites couches sont respectivement déposées.

Le dépôt de la couche secondaire 13 peut également être réalisé par méthode de dépôt physique par phase vapeur, de dépôt chimique par phase vapeur, ou par toute autre méthode appropriée.

Selon un exemple qui ne fait pas partie de l'invention, le procédé peut comporter une étape de gravure dans laquelle une partie de la couche de base 12 et une partie de la couche secondaire 13 sont éliminées sur l'ensemble de leur épaisseur, de sorte à conformer lesdites couches selon une forme prédéfinie, sans que le substrat 11 ne soit impacté, tel que le représente la figure 4.

Cette étape de gravure permet de former au moins une ouverture traversante 15 débouchant sur la troisième portion 1103 de la face supérieure 110 du substrat 11.

Une telle étape de gravure peut être mise en oeuvre par photolithographie, usinage laser, etc.

Afin de réaliser un composant d'habillage selon l'invention et comme représenté sur la figure 5, le procédé comporte des étapes successives de dépôt d'une couche de base inférieure 12' sur tout ou partie de la surface de la face inférieure 111, puis d'ablation localisée de la couche de base inférieure 12' de manière analogue à l'étape d'ablation localisée de la couche de base 12. Plus particulièrement, lors de l'étape d'ablation localisée de la couche de base inférieure 12', une structuration inférieure 112' est réalisée sur une deuxième portion 1112 de la face inférieure 111 du substrat 11, la couche de base inférieure 12' restante reposant contre une première portion 1111 de ladite face inférieure 111. Par la suite, une étape de dépôt d'une couche secondaire inférieure 13' est réalisée sur la couche de base inférieure 12' et sur la structuration inférieure 112'.

Ensuite, une étape de gravure destinée à générer une ou des ouvertures traversantes inférieure 15' débouchant sur une troisième portion 1111 de la face inférieure 111 du substrat 11, comme le montre la figure 5. Cette ou ces ouvertures traversantes inférieures 15' sont générées de sorte que ladite troisième portion 1111 de la face inférieure 111 s'étende au moins en regard de la première et de la deuxième portion 1101 et 1102 de la face supérieure 110.

Cet exemple de réalisation représenté sur la figure 5 est particulièrement avantageux pour des applications dans lesquelles le composant d'habillage 10 peut être visible selon toutes directions, par exemple s'il est intégré à un tourbillon ou dans une montre squelette.

Une éventuelle étape finale de dépôt de revêtement antireflet peut être réalisée à la suite de ces étapes, sur l'une et/ou l'autre des faces supérieure 110 et inférieure 111 du substrat 11.

De manière plus générale, il est à noter que les modes de mise en œuvre et de réalisation considérés ci-dessus ont été décrits à titre d'exemples non limitatifs, et que d'autres variantes sont par conséquent envisageables.

Notamment, le procédé de fabrication peut comporter une troisième couche peut être déposée sur la couche secondaire 13 et dans la ou lesdites poches, de manière analogue à l'étape de dépôt de la couche secondaire 13.

De manière générale, il est envisageable que le procédé comporte plusieurs étapes d'ablation localisée, chacune suivie d'une étape de dépôt d'une couche supplémentaire, selon le décor souhaité.

Il y a lieu de noter que la face inférieure 111 peut être destinée à être orientée vers un environnement intérieur et la face supérieure 110 peut être destinée à être orientée vers un environnement extérieur, c'est-à-dire vers un utilisateur.

Le composant d'habillage 10 selon l'invention forme préférentiellement et non limitativement un cadran, une glace, une lunette ou un réhaut de montre.

Dans une autre variante avantageuse, le composant d'habillage 10 forme un élément décoratif d'une coque de téléphone. L'élément décoratif peut s'étendre sur tout ou partie de la surface visible de la coque de téléphone.

## Revendications

1. Composant d'habillage (10) d'une montre, d'un article de mode ou d'un article de bijouterie ou de joaillerie, comprenant un substrat (11) réalisé dans un matériau transparent, ledit substrat (11) comprenant une face supérieure (110) opposée à une face inférieure (111) polie, le composant d'habillage (10) comprenant une couche de base (12) déposée sur une première portion (1101) de la face supérieure (110) et au moins une couche secondaire (13) déposée sur une deuxième portion (1102) de la face supérieure (110), la première et la deuxième portion (1101, 1102) de la face supérieure (110) présentant des états de surface différents l'une de l'autre, le composant d'habillage (10) étant **caractérisé en ce qu'**il comporte en outre une couche de base inférieure (12') déposée sur une première portion (1111) de la face inférieure (111), ledit composant d'habillage (10) comprenant également une couche secondaire inférieure (13') déposée sur une deuxième portion (1112) structurée de la face inférieure (111), lesdites couches de base inférieure (12') et secondaire inférieure (13') comportant une ouverture traversante inférieure (15') débouchant sur une troisième portion (1113) de la face inférieure (111) s'étendant au moins en regard de la première et de la deuxième portion (1101, 1102) de la face supérieure (110).

2. Composant d'habillage (10) selon la revendication 1, dans lequel la première portion (1101) de la face supérieure (110) est polie, et la deuxième portion (1102) de la face supérieure (110) présente au moins une structuration (112).

3. Composant d'habillage (10) selon l'une des revendications 1 ou 2, dans lequel la couche de base (12) et la couche secondaire (13) sont de composition différente l'une de l'autre.

4. Composant d'habillage (10) selon l'une des revendications 1 à 3, dans lequel la couche de base (12) et la couche secondaire (13) comportent une ouverture traversante (15) débouchant sur une troisième portion (1103) de la face supérieure (110) du substrat (11).

5. Cadran de montre **caractérisé en ce qu'**il est formé par un composant d'habillage (10) selon l'une des revendications 1 à 4.

6. Élément décoratif d'une coque de téléphone **caractérisé en ce qu'**il est formé par un composant d'habillage (10) selon l'une des revendications 1 à 4.

7. Procédé de fabrication d'un composant d'habillage (10) d'une montre, d'un article de mode, de bijouterie ou de joaillerie comprenant les étapes suivantes :
- polissage d'une face inférieure (111) d'un substrat (11) réalisé dans un matériau transparent,
- dépôt d'une couche de base (12) sur tout ou partie de la surface d'une face supérieure (110) du substrat (11),
- ablation localisée de la couche de base (12), dans laquelle une partie de ladite couche de base (12) est conservée sur une première portion (1101) de la face supérieure (110) du substrat (11), ladite ablation étant réalisée de sorte à former au moins une poche (14) débouchant sur une deuxième portion (1102) de la face supérieure (110) du substrat (11) et de sorte à structurer ladite deuxième portion (1102) de la face supérieure (110) du substrat (11),
- dépôt d'une couche secondaire (13) sur la couche de base (12) et sur la deuxième portion (1102) de la face supérieure (110) du substrat (11),
et **caractérisé par** les étapes suivantes:
- dépôt d'une couche de base inférieure (12') sur tout ou partie de la surface de la face inférieure (111),
- ablation localisée de la couche de base inférieure (12') de sorte à réaliser une structuration inférieure (112') sur une deuxième portion (1112) de la face inférieure (111) du substrat (11), la couche de base inférieure (12') restante reposant contre une première portion (1111) de ladite face inférieure (111),
- dépôt d'une couche secondaire inférieure (13') sur la couche de base inférieure (12') et sur la structuration inférieure (112'),
- gravure de sorte à générer une ou des ouvertures traversantes inférieure (15') débouchant sur une troisième portion (1113) de la face inférieure (111) du substrat (11), lesdites ouvertures traversantes inférieures (15') étant générées de sorte que ladite troisième portion (1113) de la face inférieure (111) s'étende au moins en regard de la première et de la deuxième portion (1101, 1102) de la face supérieure (110).

8. Procédé de fabrication selon la revendication 7, comportant une étape préliminaire de polissage de la face supérieure (110) du substrat (11).

9. Procédé de fabrication selon la revendication 7 ou 8, comprenant une étape de gravure dans laquelle une partie de la couche de base (12) et une partie de la couche secondaire (13) sont éliminées sur l'ensemble de leur épaisseur, sans que le substrat (11) ne soit impacté, de sorte à former au moins une ouverture traversante (15) débouchant sur une troisième portion (1103) de la face supérieure (110) du substrat (11).

10. Procédé de fabrication selon l'une des revendications 8 à 9, comportant une étape finale de dépôt de revêtement antireflet sur l'une et/ou l'autre des faces supérieure (110) et inférieure (111) du substrat (11).

## Patentansprüche

1. Zierkomponente (10) für eine Uhr, ein Modeaccessoire oder einen Schmuck- bzw. Modeschmuck-Artikel, bestehend aus einem Substrat (11) aus transparentem Material, wobei das Substrat (11) eine polierte Unterseite (111) und eine der Unterseite gegenüberliegende Oberseite (110) aufweist. Die Komponente (10) besitzt eine Basisschicht (12) auf einer ersten Zone (1101) der Oberseite (110) sowie mindestens eine Sekundärschicht (13) auf einer zweiten Zone (1102) der Oberseite (110), die unterschiedliche Oberflächenzustände aufweisen. Die Zierkomponente (10) zeichnet sich ferner dadurch aus, dass sie zusätzlich- auf der Unterseite (111) - eine weitere untere Basisschicht (12') auf einer ersten Zone (1111) aufweist, sowie eine untere Sekundärschicht (13') auf einer strukturierten zweiten Zone (1112) der Unterseite (111). Beide unteren Schichten (12', 13') enthalten eine durchgehende Öffnung (15'), die in eine dritte Zone (1113) der Unterseite (111) führt, die sich mindestens in Bereichen gegenüber der ersten und der zweiten Zone (1101, 1102) der Oberseite (110) erstreckt.

2. Zierkomponente (10) nach Anspruch 1, wobei die erste Zone (1101) der Oberseite (110) poliert ist und die zweite Zone (1102) der Oberseite (110) mindestens eine Strukturierung (112) aufweist.

3. Zierkomponente (10) nach einem der Ansprüche 1 oder 2, wobei sich die Basisschicht (12) und die Sekundärschicht (13) in ihrer Zusammensetzung unterscheiden.

4. Zierkomponente (10) nach einem der Ansprüche 1 bis 3, wobei die Basisschicht (12) und die Sekundärschicht (13) eine durchgehende Öffnung (15) aufweisen, die in eine dritte Zone (1103) der Oberseite (110) des Substrats (11) führt.

5. Uhrzifferblatt, **dadurch gekennzeichnet, dass** es aus einer Zierkomponente (10) gemäß einem der Ansprüche 1 bis 4 gebildet ist.

6. Dekoratives Element eines Telefongehäuses, **dadurch gekennzeichnet, dass** es aus einer Zierkomponente (10) gemäß einem der Ansprüche 1 bis 4 gebildet ist.

7. Verfahren zur Herstellung einer Zierkomponente (10) eine Uhr, ein Modeaccessoire oder einen Schmuck- bzw. Modeschmuck-Artikel, umfassend die folgenden Schritte:
- Polieren einer Unterseite (111) eines Substrats (11) aus einem transparenten Material
- Aufbringen einer Basisschicht (12) auf die gesamte oder einen Teil der Oberfläche einer Oberseite (110) des Substrats (11)
- lokale Abtragung der Basisschicht (12), wobei ein Teil dieser Basisschicht (12) auf einer ersten Zone (1101) der Oberseite (110) des Substrats (11) erhalten bleibt und wobei die Abtragung so durchgeführt wird, dass mindestens eine Aussparung (14) entsteht, die in eine zweite Zone (1102) der Oberseite (110) des Substrats (11) führt, und diese zweite Zone zugleich strukturiert wird.
- Aufbringen einer Sekundärschicht (13) auf die Basisschicht (12) sowie auf die zweite Zone (1102) der Oberseite (110) des Substrats (11)
und **gekennzeichnet durch** folgende weitere Verfahrensschritte:
- Aufbringen einer unteren Basisschicht (12') auf die gesamte oder einen Teil der Oberfläche der Unterseite (111)
- lokale Abtragung der unteren Basisschicht (12'), um eine untere Strukturierung (112') auf einer zweiten Zone (1112) der Unterseite (111) des Substrats (11) zu erzeugen, wobei die verbleibende untere Basisschicht (12') auf einer ersten Zone (1111) der genannten Unterseite (111) erhalten bleibt.
- Aufbringen einer unteren Sekundärschicht (13') auf die untere Basisschicht (12') und auf die untere Strukturierung (112')
- Gravur, um eine oder mehrere untere durchgehende Öffnungen (15') zu erzeugen, die in eine dritte Zone (1113) der Unterseite (111) des Substrats (11) führen, wobei diese unteren durchgehenden Öffnungen (15') so ausgebildet werden, dass sich die genannte dritte Zone (1113) der Unterseite (111) mindestens gegenüber der ersten und der zweiten Zone (1101, 1102) der Oberseite (110) erstreckt.

8. Herstellungsverfahren gemäß Anspruch 7, umfassend einen einleitenden Polierschritt der Oberseite (110) des Substrats (11).

9. Herstellungsverfahren gemäß Anspruch 7 oder 8, umfassend einen Gravierschritt, bei dem ein Teil der Basisschicht (12) und ein Teil der Sekundärschicht (13) über ihre gesamte Schichtdicke abgetragen werden, ohne das Substrat (11) zu beeinträchtigen, sodass mindestens eine durchgehende Öffnung (15) entsteht, die in eine dritte Zone (1103) der Oberseite (110) des Substrats (11) führt.

10. Herstellungsverfahren gemäß einem der Ansprüche 8 bis 9, umfassend einen abschließenden Schritt zum Aufbringen einer Antireflexionsbeschichtung auf der Oberseite (110) und/oder der Unterseite (111) des Substrats (11).

## Claims

1. An external part component (10) of a watch, a fashion item or a jewellery item, comprising a substrate (11) made of a transparent material, said substrate (11) comprising an upper face (110) opposite to a polished lower face (111), the external part component (10) being **characterised in that** it comprises a base layer (12) deposited over a first portion (1101) of the upper face (110) and at least one secondary layer (13) deposited over a second portion (1102) of the upper face (110), the first and second portions (1101, 1102) of the upper face (110) having different surface conditions, the external part component (10) being **characterised in that** it also includes a lower base layer (12') deposited over a first portion (1111) of the lower face (111), said external part component (10) also comprising a lower secondary layer (13') deposited over a structured second portion (1112) of the lower face (111), said lower base (12') and lower secondary (13') layers including a lower through opening (15') leading onto a third portion (1113) of the lower face (111) extending at least opposite the first and second portions (1101, 1102) of the upper face (110).

2. The external part component (10) according to claim 1, wherein the first portion (1101) of the upper face (110) is polished, and the second portion (1102) of the upper face (110) has at least one structuration (112).

3. The external part component (10) according to one of claims 1 or 2, wherein the base layer (12) and the secondary layer (13) have different compositions.

4. The external part component (10) according to one of claims 1 to 3, wherein the base layer (12) and the secondary layer (13) include a through opening (15) leading onto a third portion (1103) of the upper face (110) of the substrate (11).

5. A watch dial **characterised in that** it is formed by an external part component (10) according to one of claims 1 to 4.

6. A decorative element of a phone case **characterised in that** it is formed by an external part component (10) according to one of claims 1 to 4.

7. A method for manufacturing an external part component (10) of a watch, a fashion or jewellery item, comprising the following steps:
- polishing of a lower face (111) of a substrate (11) made of a transparent material,
- deposition of a base layer (12) over all or part of the surface of an upper face (110) of the substrate (11),
- localised removal of the base layer (12), in which a portion of said base layer (12) is preserved over a first portion (1101) of the upper face (110) of the substrate (11), said removal being carried out so as to form at least one pocket (14) leading onto a second portion (1102) of the upper face (110) of the substrate (11) and so as to structure said second portion (1102) of the upper face (110) of the substrate (11),
- deposition of a secondary layer (13) over the base layer (12) and over the second portion (1102) of the upper face (110) of the substrate (11), and **characterised by** the following steps :
- deposition of a lower base layer (12') over all or part of the surface of the lower face (111),
- localised removal of the lower base layer (12') so as to carry out a lower structuration (112') over a second portion (1112) of the lower face (111) of the substrate (11), the remaining lower base layer (12') resting against a first portion (1111) of said lower face (111),
- deposition of a lower secondary layer (13') over the lower base layer (12') and over the lower structuration (112'),
- etching so as to generate one or more lower through opening(s) (15') leading onto a third portion (1113) of the lower face (111) of the substrate (11), said lower through openings (15') being generated so that said third portion (1113) of the lower face (111) extends at least opposite the first and second portions (1101, 1102) of the upper face (110).

8. The manufacturing method according to claim 7, including a preliminary step of polishing the upper face (110) of the substrate (11).

9. The manufacturing method according to claim 7 or 8, comprising an etching step in which a portion of the base layer (12) and a portion of the secondary layer (13) are eliminated over the entirety of their thickness, without the substrate (11) being impacted, so as to form at least one through opening (15) leading onto a third portion (1103) of the upper face (110) of the substrate (11).

10. The manufacturing method according to one of claims 8 to 9, including a final step of depositing an anti-reflection coating over either one or both of the upper (110) and lower (111) faces of the substrate (11).
